# EUROPEAN PATENT APPLICATION

(11) **EP 1 519 539 A2**
(43) Date of publication of application: **30.03.2005**
(21) Application number: 04255911.2
(22) Date of filing: 28.09.2004
(51) Int. Cl.: H04L 29/06

(54) **Mobility device**

(30) Priority: 29.09.2003 US 507197 P; 29.09.2003 US 506918 P; 29.09.2003 US 506919 P; 29.09.2003 US 506925 P; 22.01.2004 US 543735 P; 22.01.2004 US 538763 P; 22.01.2004 US 538915 P; 22.01.2004 US 538767 P; 30.04.2004 US 836933
(71) Applicant: Realm Systems, Inc., Salt Lake City, Utah 84124 (US)
(72) Inventor: Bookman, Peter, Draper Utah 84020 (US); White, Rick Charles, Salt Lake City Utah 84124 (US)
(74) Representative: Murnane, Graham John

(57) **Abstract**

A mobility device for use in a mobility device platform allowing for secure mobile computing is provided. In an illustrative implementation, an exemplary mobility device platform comprises a mobility device operable to communicate with at least one computing environment through a communications interface and wherein the mobility device is operable to process and store secure web services, a communications network operable to communicate data and computing applications using web services, and a mobility device management server operable to generate, process, store, communicate and encrypt web services to the mobility device. The mobility device may comprise a processing unit, a mobility device communications interface for interfacing with cooperating computing environments, a memory storage unit, and an operating system operable to execute web services and/or computing applications.

## Description

### CLAIM OF PRIORITY AND CROSS REFERENCE

This application claims the benefit of the following U.S. Provisional Patent Applications: 60/507,197, entitled, "GO-KEY SYSTEM," filed on September 29, 2003; 60/506,918, entitled, "GO-KEY ONLINE MUSIC SUBSCRIPTION AND DISTRIBUTION APPLICATION AND SERVICE," filed on September 29, 2003; 60/506,919, entitled, "GO-KEY E-MAIL APPLICATION AND SERVICE," filed on September 29, 2003; 60/506,925, entitled, "GO-KEY MOBILE DESKTOP ENVIRONMENT," filed on September 29, 2003; 60/543,735, entitled, "MDMS," filed on January 22, 2004; 60/538,763, entitled, "OMNI FILE SYSTEM (OFS)," filed on January 22, 2004; 60/538,915, entitled, "UDDI DIRECTORY," filed on January 22, 2004; and 60/538,767, entitled, "UDDI REPOSITORY," filed on January 22, 2004, which are hereby incorporated by reference in their entirety. Additionally, this application is related to, cross-references, and herein, incorporates by reference in its entirety the following co-pending applications: 10/837,426, entitled, "MOBILITY DEVICE PLATFORM," (Attorney Docket: 45597/196314), filed on April 30, 2004, and 10/836,934, entitled, "MOBILITY DEVICE SERVER," (Attorney Docket: 45597/196321), filed on April 30, 2004.

### FIELD OF INVENTION

The herein described apparatus and methods relate to a mobile computing technologies, and more importantly, to a mobility device that allows for secure, remote mobile computing utilizing a communications network and a mobility device server.

### BACKGROUND

Enterprises and individuals, alike, increasingly require mobility as a feature of their computing environment(s). For enterprises, mobility allows the deployment of personnel across disparate geographic locations allowing the enterprises to better serve their clients. For example, a large pharmaceutical corporation may wish to deploy their sales personnel in the "field" close to prospective customers (e.g. doctors). In such context, "field" personnel may wish to have access to sensitive sales and marketing information and computing application over a secure connection. With current solutions, these personnel are often left with the cumbersome task of "synchronizing" their data at the end of the day with their corporate network through some secure computer network connection (e.g. virtual private network). Comparatively, individuals seek mobility in their computing environments to allow for the ability to be close to their data and computing applications, and more importantly, to continually stay "connected" in the age of Internet communications.

Responsive to the need for mobile computing, computing environment manufacturers have developed mobile computing technologies (e.g. stand alone, networked, and/or embedded) that allow people to enjoy their computing environments on the road. Such mobile devices aim at allowing the user to "carry" their files and applications with them at all times. Although providing mobility, these devices tend to be marginally effective as they vary in form factor, processing capability, and portability. With such limitations, users are often relegated to lugging around large portable computers to ensure that they have all of their needed files and computing applications. Such practice is premised on the inherent deign of computing systems - namely employing "device-centric" computing.

With "device-centric" computing, computing users, although may have access to files remotely and securely via remote communications applications (e.g. virtual private networks), still are relegated to carry around large cumbersome computing instrumentalities to retrieve their data and computing applications. More importantly, with device centric computing, users are generally provisioned one device for their enterprise computing needs (e.g. company personal computer, or laptop) and generally have one or more computing environments in their home for personal use. In maintaining multiple computing environments, computer users are charged with the task of synchronizing their custom preferences and settings among their many different computing environments. Such task is arduous at best and often leaves computer users frustrated in not having access to desired data and/or computing applications between their many different computing environments.

For example, a computer user may wish to have their financial planning and management data from his/her financial planning and management computing application (e.g. Quicken, Microsoft Money) with them at all times to address any payments that might spring up (e.g. a lapsed bill). With current solutions, the computing user is relegated to install the financial planning and management computing application and data on each of his/her computing environments (including his/her corporate computer - which may be in violation of corporate computing policies and procedures) so that he/she can have access to this desired data. Comparatively, enterprises may wish to effectively and immediately terminate all access to sensitive corporate data from employees who are to be terminated. Under current practices that are based on device-centric computing, the employee is asked to turn in their computing environments (e.g. laptops, personal computers, mobile phone, or personal digital assistants). Additionally, the soon-to-be terminated employee may be restricted in their use of corporate data by terminating their enterprise user directory information. However, there is an inherent latency in collecting such devices and terminating access. Such latency could result in the employee copying files from the enterprise computing environment for their subsequent use. As such, under existing practices sensitive enterprise data may be compromised.

From the foregoing it is appreciated that there exists a need to overcome the shortcomings of existing practices.

### SUMMARY

A mobility device for use in a mobility device platform allowing for secure mobile computing is provided. In an illustrative implementation, an exemplary mobility device platform comprises a mobility device operable to communicate with at least one computing environment through a communications interface and wherein the mobility device is operable to process and store secure web services, a communications network operable to communicate data and computing applications using web services, and a mobility device management server operable to generate, process, store, communicate and encrypt web services to the mobility device. The mobility device may comprise a processing unit, a mobility device communications interface for interfacing with cooperating computing environments, a memory storage unit, and an operating system operable to execute web services and/or computing applications.

In operation, the mobility device cooperates with one or more cooperating computing environments through the mobility device communications interface. The mobility device may engage in user authentication using user authentication information. Once authenticated, the mobility device may cooperate with at least one cooperating computing environment through the mobility device communications interface to execute a web service and/or computing application on the cooperating computing environment. Further the mobility device may cooperate with cooperating mobility device management servers to obtain web services and/or computing applications for execution on the at least one cooperating computing environment.

Other features of the herein described apparatus and methods are further described below.

### BRIEF DESCRIPTION OF THE DRAWINGS

The mobility device platform and methods of use are further described with reference to the accompanying drawings in which:

Figure 1 is a block diagram of an exemplary computing environment in accordance with an implementation of the herein described apparatus and methods;

Figure 2 is a block diagram of an exemplary computing network environment in accordance with the herein described system and methods;

Figure 3 is a block diagram showing the interaction between exemplary computing components in accordance with the herein described apparatus and methods;

Figure 4 is a block diagram of an illustrative implementation of a mobility device platform in accordance with the herein described apparatus and methods;

Figure 5 is a block diagram of an illustrative software architecture of exemplary mobility device in accordance with the herein described apparatus and methods;

Figure 6 is a block diagram of an illustrative hardware architecture of an exemplary mobility device in accordance with herein described apparatus and methods;

Figure 7 is a block diagram showing an illustrative user and device authentication stack for an exemplary mobility device in accordance with the herein described apparatus and methods;

Figure 8 is a block diagram of an illustrative implementation of multiple workspaces for an exemplary mobility device in accordance with the herein described apparatus and methods; and

Figure 9 is a flow diagram of illustrative processing performed when configuring an exemplary mobility device in accordance with the herein described apparatus and methods.

### DETAILED DESCRIPTION

### Overview:

The herein described apparatus and methods offer a "user-centric" approach to computing and mobile computing. Current computing solutions, enterprise or individual, are generally designed using a "device-centric" model. The device-centric model aims at managing and tracking users based on device assignments and designations. For example, in the context of enterprise computing, the enterprise computing environment may comprise a number of server computing environments and numerous client computing environments. Generally, each user in the enterprise is provisioned client computing environment (e.g. personal computer or laptop computer) that is generally networked to the server computing environment through the enterprise communications interface or, if the user is remote to the enterprise communications network, through a virtual private network (VPN). Additionally, in conventional enterprise computing environments, the users are provided user identification information and password information through a directory services structure that associates user rights and privileges to certain enterprise data and computing applications.

With such enterprise computing environments, the user is often relegated to be only allowed to customize his/her provisioned computing environment with their preferences and settings such that if the user roams across the network and logs onto to a computing environment other than their own, they do not have access to their custom preferences and settings. This problem is also seen as enterprise users wishing to maintain synchronization in preferences and settings (e.g. browser bookmarks, look and feel of desktop, color scheme, layout of applications, and directory structure for files) between their enterprise computing environment and their personal computing environment (e.g. home computer) are often relegated to perform manual synchronization.

Moreover, with existing enterprise computing environments administration of the numerous client computing environments becomes a daunting task. Currently, enterprises hire information technology departments numbering in the tens, in not hundreds, to support the many users and their computing environments. Beyond mere physical administration, integrity and security of corporate data is put into play with the device-centric computing model. In such context, enterprise computing users are often left to their own volition in copying and comprising sensitive enterprise data. As the task of preventing users from unauthorized copying of enterprise files and data is daunting at best, most enterprises turn a blind eye. Such limitation of existing practices can be very costly to enterprises and individuals alike.

The herein described apparatus and methods aim to ameliorate the shortcomings of existing practices by providing a mobility device designed using a "user-centric" model. In an illustrative implementation, the mobility device is intended for use as part of a mobility device platform which comprises at least one mobility device (MD) operable to communicate with one or more cooperating computing environments (e.g. personal computer, personal digital assistant, mobile phone, networked computer, and other computing environments) through a communications interface (e.g. universal serial bus (USB), IEEE 1394 communications interface (Firewire), 802.XX communications interface, blutetooth communications interface, personal computer interface, small computer serial interface, and wireless application protocol (WAP) communications interface). Additionally, the mobility device platform comprises one or more mobility device management servers (MDMS) that operate to authenticate and verify and provide user management for cooperating mobility devices and their users.

In operation, the mobility device may cooperate with one or more computing environments invoking one or more work spaces to process web services. The web services may be executed from data and computing applications local to the MD, or the MD may cooperate with one or more MDMS to obtain the desired web service. The MDMS may operate to authenticate requesting MDs to ensure that they have the rights and privileges to the requested web services. Additionally, the MDMS may cooperate with third party web service providers to obtain requested web services. In such context, the MDMS may act to translate the web service from a non-MD native web service format to a native MD web service. When communicating web services from the MDMS to cooperating MDs, the MDMS and MD engage in 1028 bit and/or 2056 bit encryption (e.g. PKI encryption) using user and device authentication and verification information. The web services provided by the MDMS to the MD may include but are not limited to computing applications and desired data. Additionally, the MD may operate to store the participating user's customized settings and preferences local to the MD so they are available to the user at all times.

As such with the mobility device, users may traverse any number of cooperating computing environments confident that they will have access to their customized settings and preferences and, more importantly, secure access to their computing applications and files (e.g. as provided as web services).

### Web Services:

Services provided over the a communications network such as the internet Internet, commonly referred to as web services or application services, are evolving. Likewise, technologies that facilitate such services are also evolving. A web service can be defined as any information source running business logic processes conveniently packaged for use by an application or end-user. Web services are increasingly becoming the means through which one can provide functionality over a network. Web services typically include some combination of programming and data that are made available from an application server for end users and other network-connected application programs. Web services range from such services as storage management and customer relationship management down to much more limited services such as the furnishing of a stock quote and the checking of bids for an auction item.

Activities focusing on defining and standardizing the use of web services include the development of Web Services Description Language (WSDL). WSDL is an Extensible Markup Language (XML) format for describing web services as a set of endpoints operating on messages containing either document-oriented or procedure-oriented information. The operations and messages are described abstractly, and then bound to a concrete network protocol and message format to define an endpoint. Related concrete endpoints are combined into abstract endpoints (services).

Currently, the advocated web service usage model is generally as follows.

(1) Services are implemented and deployed on one site, often referred to as the server side.

(2) Services are described using WSDL and are published via means such as UDDI (Universal Description, Discovery, and Integration), which is an XML-based registry for businesses worldwide to list themselves on the Internet by the web services they offer.

(3) Client applications use web services at another site, often referred to as the client side, by first interpreting one or more WSDL documents. Once interpreted, the clients can understand the characteristics of the associated service(s). For example, service characteristics may include service API specifications such as (a) input data type, (b) service input data format, (c) service access mechanism or style (e.g., RPC versus messaging), and (d) related encoding format.

(4) Client applications prepare their data in manners in which various particular web services understand.

(5) Client applications invoke a particular service according to the manner specified for the service, such as in an associated WSDL document.

Many differences exist among web services with respect to the format of input data and the manner in which they are invoked. For example, suppose one application service provider provides a service, getCityWeather, that requires a single input parameter, such as a conventional city name (e.g., SLC for Salt Lake City). A client application that intends to invoke such a service needs to be written so that data within or output by the application is able to be analyzed to extract the city information. At runtime, the prepared symbol is passed to the getCityWeather service site using appropriate APIs.

However, suppose another application service provider provides a similar service that requires two input parameters, such as the city name and the zip code. Hence, if a client application intends to invoke this second service, it needs to analyze and extract its data appropriately in regards to the required service input parameters. Therefore, if a single application was intended to invoke both services, the application would have to be hard-coded with service-specific API information and procedures. Furthermore, if the application was intended to invoke numerous services, the application would have to be hard-coded with service-specific API information and procedures related to each and every service that it intended to invoke.

As explained above, various web services may provide similar functionality but differ in many ways. The herein described system and methods aim to ameliorate such disparity by offering a mobility device platform having a mobile device management server which includes, among other things, a web services translation module operative to accept data from web services web services providers and present them in a web service model native to cooperating mobility devices.

### Simple Object Access Protocol (SOAP) Overview:

The Simple Object Access Protocol (SOAP) is a lightweight, XML-based protocol for exchanging information in a decentralized, distributed environment. SOAP supports different styles of information exchange, including:

Remote Procedure Call style (RPC), which allows for request-response processing, where an endpoint receives a procedure oriented message and replies with a correlated response message.

Message-oriented information exchange, which supports organizations and applications that need to exchange business or other types of documents where a message is sent but the sender may not expect or wait for an immediate response.

Generally, a SOAP message consists of a SOAP envelope that encloses two data structures, the SOAP header and the SOAP body, and information about the name spaces used to define them. The header is optional; when present, it conveys information about the request defined in the SOAP body. For example, it might contain transactional, security, contextual, or user profile information. The body contains a Web Service request or reply to a request in XML format. The high-level structure of a SOAP message is shown in the following figure.

SOAP messages, when used to carry Web Service requests and responses, can conform to the web services definition language (WSDL) definition of available Web Services. WSDL can define the SOAP message used to access the Web Services, the protocols over which such SOAP messages can be exchanged, and the Internet locations where these Web Services can be accessed. The WSDL descriptors can reside in UDDI or other directory services, and they can also be provided via configuration or other means such as in the body of SOAP request replies.

There is a SOAP specification (e.g. w3 SOAP specification - found at www.w3.org) that provides a standard way to encode requests and responses. It describes the structure and data types of message payloads using XML Schema. The way that SOAP may be used for the message and response of a Web Service is:

The SOAP client uses an XML document that conforms to the SOAP specification and which contains a request for the service.

The SOAP client sends the document to a SOAP server, and the SOAP servlet running on the server handles the document using, for example, HTTP or HTTPS.

The Web service receives the SOAP message, and dispatches the message as a service invocation to the application providing the requested service.

A response from the service is returned to the SOAP server, again using the SOAP protocol, and this message is returned to the originating SOAP client.

It is appreciated that although SOAP is described herein as a communication protocol for the herein described apparatus and methods that such description is merely illustrative as the herein described apparatus and methods may employ various communication protocols and messaging standards.

### Illustrative Computing Environment

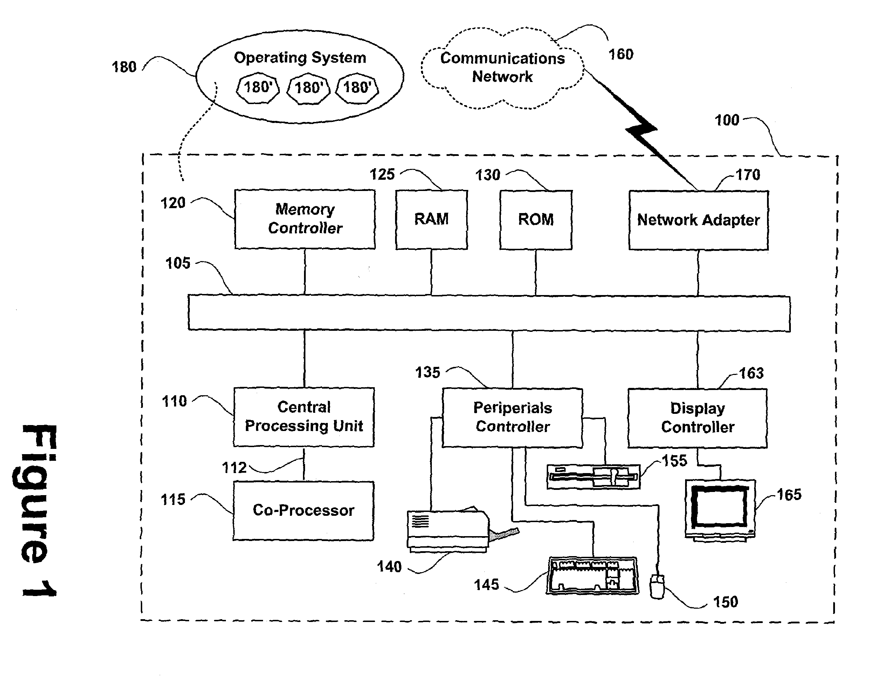

Figure 1 depicts an exemplary computing system 100 in accordance with herein described system and methods. Computing system 100 is capable of executing a variety of operating systems 180 and computing applications 180' (e.g. web browser and mobile desktop environment) operable on operating system 180. Exemplary computing system 100 is controlled primarily by computer readable instructions, which may be in the form of software, where and how such software is stored or accessed. Such software may be executed within central processing unit (CPU) 110 to cause data processing system 100 to do work. In many known computer servers, workstations and personal computers central processing unit 110 is implemented by micro-electronic chips CPUs called microprocessors. Coprocessor 115 is an optional processor, distinct from main CPU 110, that performs additional functions or assists CPU 110. CPU 110 may be connected to co-processor 115 through interconnect 112. One common type of coprocessor is the floating-point coprocessor, also called a numeric or math coprocessor, which is designed to perform numeric calculations faster and better than general-purpose CPU 110.

It is appreciated that although an illustrative computing environment is shown to comprise a single CPU 110 that such description is merely illustrative as computing environment 100 may comprise a number of CPUs 110. Additionally computing environment 100 may exploit the resources of remote CPUs (not shown) through communications network 160 or some other data communications means (not shown).

In operation, CPU 110 fetches, decodes, and executes instructions, and transfers information to and from other resources via the computer's main data-transfer path, system bus 105. Such a system bus connects the components in computing system 100 and defines the medium for data exchange. System bus 105 typically includes data lines for sending data, address lines for sending addresses, and control lines for sending interrupts and for operating the system bus. An example of such a system bus is the PCI (Peripheral Component Interconnect) bus. Some of today's advanced busses provide a function called bus arbitration that regulates access to the bus by extension cards, controllers, and CPU 110. Devices that attach to these busses and arbitrate to take over the bus are called bus masters. Bus master support also allows multiprocessor configurations of the busses to be created by the addition of bus master adapters containing a processor and its support chips.

Memory devices coupled to system bus 105 include random access memory (RAM) 125 and read only memory (ROM) 130. Such memories include circuitry that allows information to be stored and retrieved. ROMs 130 generally contain stored data that cannot be modified. Data stored in RAM 125 can be read or changed by CPU 110 or other hardware devices. Access to RAM 125 and/or ROM 130 may be controlled by memory controller 120. Memory controller 120 may provide an address translation function that translates virtual addresses into physical addresses as instructions are executed. Memory controller 120 may also provide a memory protection function that isolates processes within the system and isolates system processes from user processes. Thus, a program running in user mode can normally access only memory mapped by its own process virtual address space; it cannot access memory within another process's virtual address space unless memory sharing between the processes has been set up.

In addition, computing system 100 may contain peripherals controller 135 responsible for communicating instructions from CPU 110 to peripherals, such as, printer 140, keyboard 145, mouse 150, and data storage drive 155.

Display 165, which is controlled by display controller 163, is used to display visual output generated by computing system 100. Such visual output may include text, graphics, animated graphics, and video. Display 165 may be implemented with a CRT-based video display, an LCD-based flat-panel display, gas plasma-based flat-panel display, a touch-panel, or other display forms. Display controller 163 includes electronic components required to generate a video signal that is sent to display 165.

Further, computing system 100 may contain network adaptor 170 which may be used to connect computing system 100 to an external communication network 160. Communications network 160 may provide computer users with means of communicating and transferring software and information electronically. Additionally, communications network 160 may provide distributed processing, which involves several computers and the sharing of workloads or cooperative efforts in performing a task. It will be appreciated that the network connections shown are exemplary and other means of establishing a communications link between the computers may be used.

It is appreciated that exemplary computer system 100 is merely illustrative of a computing environment in which the herein described apparatus and methods may operate and does not limit the implementation of the herein described apparatus and methods in computing environments having differing components and configurations as the inventive concepts described herein may be implemented in various computing environments having various components and configurations.

### Illustrative Computer Network Environment:

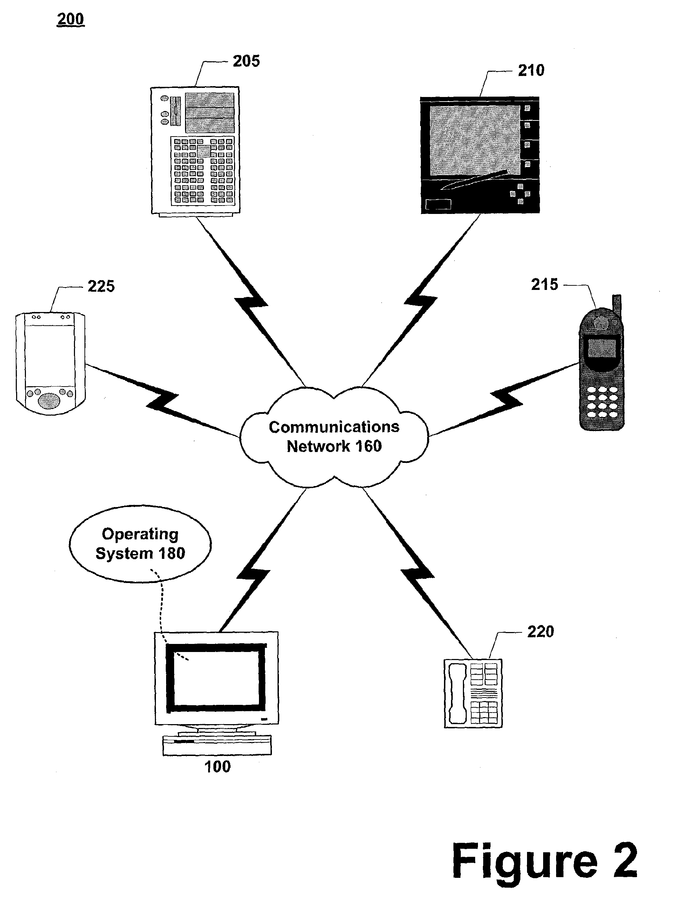

Computing system 100, described above, can be deployed as part of a computer network. In general, the above description for computing environments applies to both server computers and client computers deployed in a network environment. Figure 2 illustrates an exemplary illustrative networked computing environment 200, with a server in communication with client computers via a communications network, in which the herein described apparatus and methods may be employed. As shown in Figure 2 server 205 may be interconnected via a communications network 160 (which may be either of, or a combination of a fixed-wire or wireless LAN, WAN, intranet, extranet, peer-to-peer network, the Internet, or other communications network) with a number of client computing environments such as tablet personal computer 210, mobile telephone 215, telephone 220, personal computer 100, and personal digital assistance 225. Additionally, the herein described apparatus and methods may cooperate with automotive computing environments (not shown), consumer electronic computing environments (not shown), and building automated control computing environments (not shown) via communications network 160. In a network environment in which the communications network 160 is the Internet, for example, server 205 can be dedicated computing environment servers operable to process and communicate web services to and from client computing environments 100, 210, 215, 220, and 225 via any of a number of known protocols, such as, hypertext transfer protocol (HTTP), file transfer protocol (FTP), simple object access protocol (SOAP), or wireless application protocol (WAP). Each client computing environmet 100, 210, 215, 220, and 225 can be equipped with browser operating system 180 operable to support one or more computing applications such as a web browser (not shown), or a mobile desktop environment (not shown) to gain access to server computing environment 205.

In operation, a user (not shown) may interact with a computing application running on a client computing environments to obtain desired data and/or computing applications. The data and/or computing applications may be stored on server computing environment 205 and communicated to cooperating users through client computing environments 100, 210, 215, 220, and 225, over exemplary communications network 160. A participating user may request access to specific data and applications housed in whole or in part on server computing environment 205 using web services transactions. These web services transactions may be communicated between client computing environments 100, 210, 215, 220, and 220 and server computing environments for processing and storage. Server computing environment 205 may host computing applications, processes and applets for the generation, authentication, encryption, and communication of web services and may cooperate with other server computing environments (not shown), third party service providers (not shown), network attached storage (NAS) and storage area networks (SAN) to realize such web services transactions.

Thus, the apparatus and methods described herein can be utilized in a computer network environment having client computing environments for accessing and interacting with the network and a server computing environment for interacting with client computing environments. However, the apparatus and methods providing the mobility device platform can be implemented with a variety of network-based architectures, and thus should not be limited to the example shown. The herein described apparatus and methods will now be described in more detail with reference to a presently illustrative implementation.

### Mobility Device Platform Components:

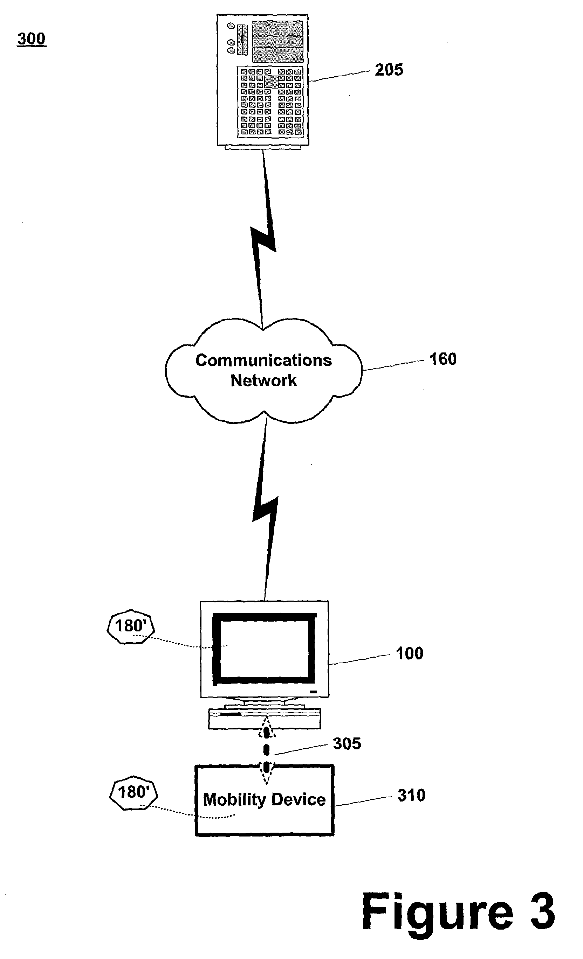

Figure 3 shows an exemplary interaction between an exemplary mobility device and an illustrative mobility device platform. Generally as is shown in Figure 3, exemplary mobility device platform 300, in simple terms, may comprise mobility device 310 cooperating with client computing environment 100 using communications interface 305 operating on a selected communications protocol (not shown). Additionally, exemplary mobility device platform 300 may further comprise communications network 160 (of Figure 1) and server computing environment 205.

In operation mobility device may cooperate with client computing environment 100 through communications interface 305 to execute one or more computing applications 180' originating from mobility device 310 and displayable for user interaction on client computing environment 100. Computing applications 180' may include but are not limited to, a browser application offering the look and feel of conventional operating systems, word processing applications, spreadsheets, database applications, web services applications, and user management/preference applications. Additionally, mobility device 310 may cooperate with server computing environment 205 via communications network 160 using client computing environment 100 to obtain data and/or computing applications in the form of web services.

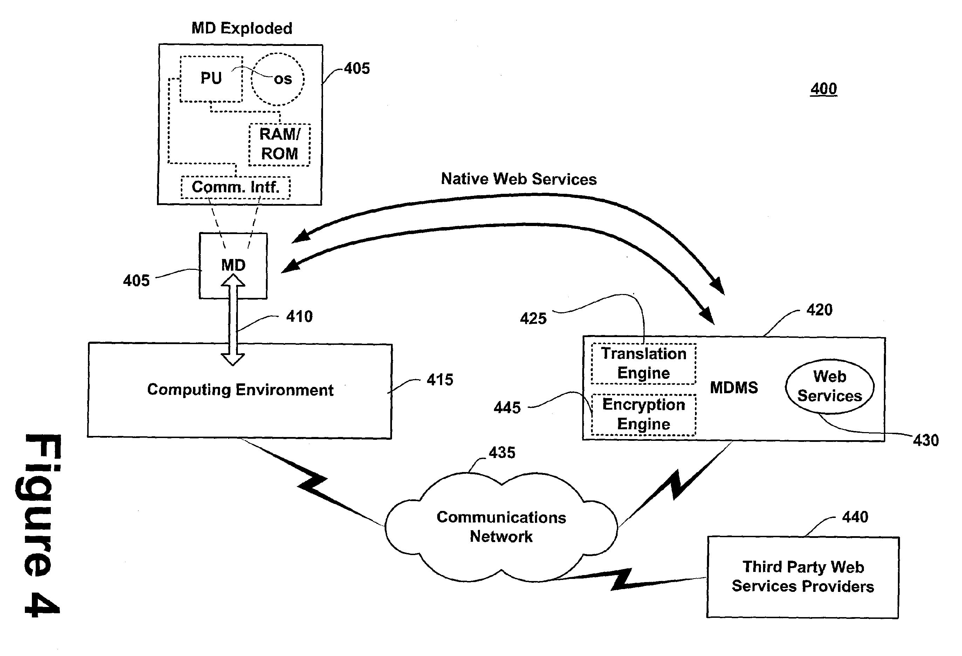

Figure 4 shows the interplay of exemplary mobility device 405 with illustrative mobility device platform 400. As is shown in Figure 4, exemplary mobility device platform 400 comprises mobility device (MD) 405, computing environment 410, communications network 435, mobility device management server (MDMS) 420 and third party web service providers 440. Additionally, as is further shown in the MD exploded view, MD 405 further comprises processing unit (PU), operating system (OS), storage memory (RAM/ROM), and an MD communications interface. Also, MDMS 420 further comprises translation engine 425, web services 430, and encryption engine 445.

In operation, MD 405 communicates with computing environment 415 using one or more of MD components PU, OS, RAM/ROM and MD communications interface through MD/computing environment communications interface 410. When communicating with computing environment 415, MD 405 may launch one or more computing applications (not shown) that may include but are not limited to, a mobile desktop environment, user customization and authentication manager, and web services applications as part of configuration. Once configured, MD 405 may further cooperate with computing environment 415 to process one or more web services (e.g. web service data and/or computing applications). In such context, MD 405 may also request web services data and/or computing applications from cooperating MDMS 420 using communications network 435 to process such web services. In such instance, MDMS 420 may operate to authenticate MD 405 to ensure that the participating user (not shown) and mobility device 405 have the correct privileges to the requested data and/or computing applications.

If properly authenticated, MDMS 420 may further operate to locate the requested data and/or computing applications locally at MDMS 420 and provide such requested data and/or computing applications (e.g. web services) to the authenticate MD 405 over communications network 435, or operate to cooperate with third party services providers 440 to obtain the requested web services for communication to the authenticated MD 405. When cooperating with third party web services providers 440, MDMS 420 may operate to translate the web services 430 originating from third party web services providers 440 to an MD native format using translation engine 425. Additionally, MDMS 420 may operate to encrypt requested web services using encryption engine 445 when satisfying requests for web services from authenticated MD 405.

Additionally, MDMS 420 may further operate to cooperate with a file system (not shown) using a selected encryption protocol (e.g. PKI encryption) to obtain the requested data for communication to MD 405. The cooperating file system may include but is not limited to file allocation table (FAT) file systems and new technology files system (NTFS).

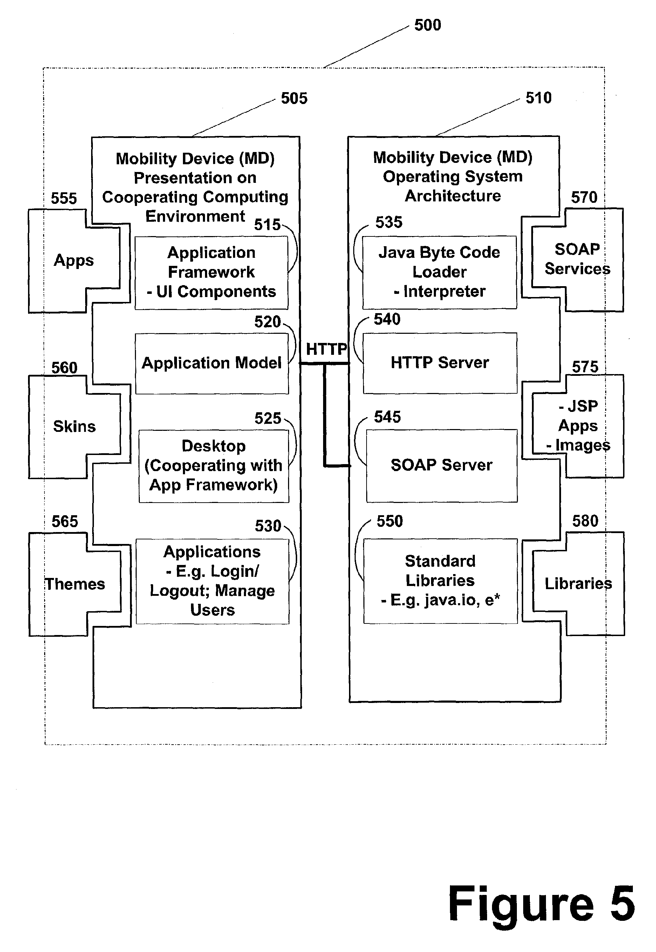

Figure 5 is a block diagram of exemplary software components and their interaction for exemplary mobility device (MD) 500. As is shown in Figure 5 exemplary mobility device 500 comprises mobility device presentation on computing environment module 505 and mobility device operating system module 510. The MD presentation module and MD operating system module are operatively coupled vial HTTP communications interface. MD presentation module 505 further comprises application framework sub-module 515, application model 520, desktop environment 525 and applications 530. Additionally, applications 555, skins 560, and themes 565 cooperate with MD presentation module to provide data for use in creating one or more presentations (e.g. mobile desktop environment) on a cooperating computing environment (not shown).

MD operating system 510 further comprises java byte code loader 535, hyper text transfer protocol (HTTP) server 540, simple object access protocol (SOAP) server 545 and standard libraries 550. Additionally, SOAP services 570, java server pages (JSP) applications and images 575, and libraries 580 contribute data and functionality to MD operating system 510 to allow mobility device to process and execute web services (not shown).

In operation, mobility device 500 employs MD presentation module 505 and MD operating system module 510 to establish a presentation and execution environment (e.g. mobile desktop environment) with a cooperating computing environment (not shown). Application framework 515 and application model 520 may operate to provide parameters and configuration variables for applications operating through the mobility device and on the cooperating computing environment (not shown). Desktop 530 provides the mobile desktop environment to allow web services and/or computing application execution. Applications 530 work on the application framework and application model to provide one or more applications for execution on the cooperating computing environment through mobility device. Additional data applications 555 are additional applications executable by the mobility device on the cooperating computing environment. Skins 560 and themes 565 provide appearance and display configuration parameters and settings that allow participating users the ability to customize the look and feel of the applications and mobile desktop environment executed by the mobility device.

MD operating system module 510 operates to provide the software architecture on which computing applications and web services may be executed by the mobility device. Java byte code loader 535 operates to assist in the processing of java language modules. HTTP server 540 operates to provide HTTP communication services for the mobility device. SOAP server 545 operates to provide SOAP operations for the mobility device. Standard libraries 550 provide programming language (i.e. java) libraries for use in compiling and executing various java code. SOAP services 570 provide parameters and configuration values to MD operating system module 510 to handle SOAP transactions (e.g. web services). JSP applications and images provide additional data to MD operating system module to handle java server pages. Libraries 580 provide additional programming libraries for use by MD operating system module 510 to support he execution of computing applications and processing of web services.

It is appreciated that shape of MD presentation module 505 and MD operating system module 510 is illustrated as having a mortis and tenon arrangement to illustrate that mobility device is capable of accepting a plurality of cooperating data, features, and operations to assist in processing and executing web services. Furthermore, these module shapes are provided surrounded by a dashed line box to illustrate that such data, features, and operations are interchangeable and moveable between modules.

It is further appreciated that although mobility device 500 is illustrated to have an illustrative configuration and illustrative components that such description is merely exemplary as the herein described apparatus and methods may be realized through various components having various configurations.

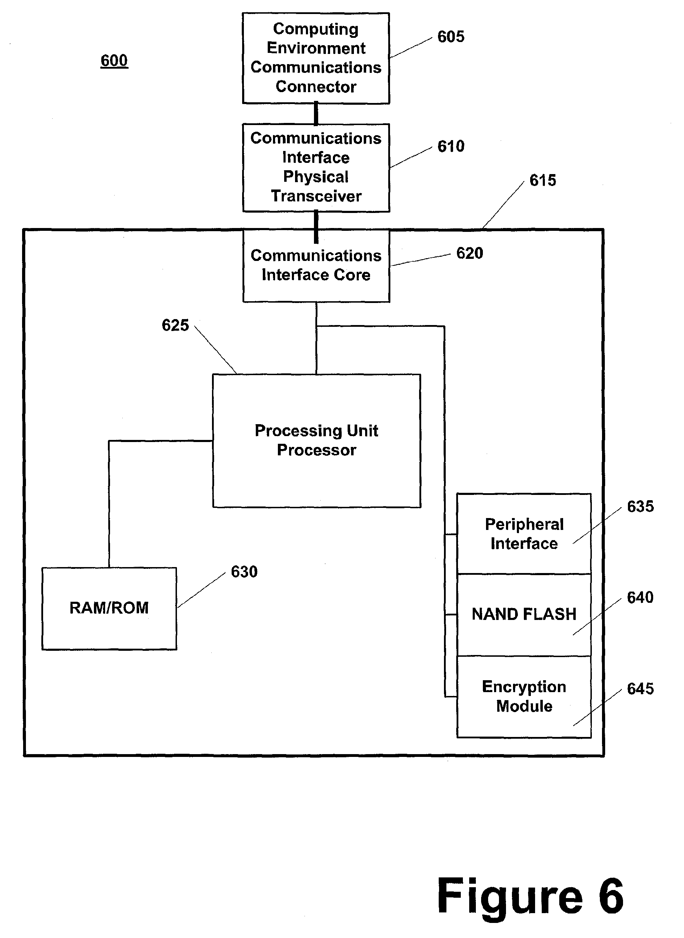

Figure 6 is a block diagram of exemplary hardware architecture for an illustrative mobility device. As is shown, mobility device 600 comprises computing environment communications connector 605, communications interface physical transceiver 610 and mobility device core 615. Mobility device core 615 further comprises communications interface core 620, processing unit processor 625, RAM/ROM 630, peripheral interface 635, NAND flash 640 and encryption module 645.

In operation mobility device 600 communicates with a cooperating computing environment (not shown) through computing environment communications connector. Being physically connected, mobility device 600 may engage in communications with the cooperating computing environment (not shown) to control one or more operations on the cooperating computing environment (not shown). In such context, data may be exchanged between the mobility device 600 and the cooperating computing environment (not shown) through communications interface physical transceiver 610. Additionally, mobility device may process data, commands, services, and operations through communications interface core 620 of mobility device core 615. Once at the communications interface core, processing unit processor 625 may cooperate with RAM/ROM 630, peripheral interface 635, NAND flash 640, and encryption module 645 to process the data, services, commands, and operations originating from cooperating computing environment (not shown) or from a cooperating component (e.g. cooperating mobility device management server)(not shown) that may be operatively coupled to the cooperating computing environment (not shown).

In an illustrative implementation peripheral interface 635 may operate to allow for the physical connection of one or more peripherals to mobility device 600 including but not limited to flash memory, automated controls, communications modules, and input peripherals (e.g. mouse, keyboard, security peripherals, including but not limited to, biometric security peripherals, retinal scanning security peripherals, and security voice recognition peripherals). Encryption module 645 may operate to encrypt and decrypt data, services, commands, and applications for use by processing unit processor 625 of mobility device 600.

It is appreciated that although mobility device 600 is illustrated to have an illustrative configuration and illustrative components that such description is merely exemplary as the herein described apparatus and methods may be realized through various components having various configurations.

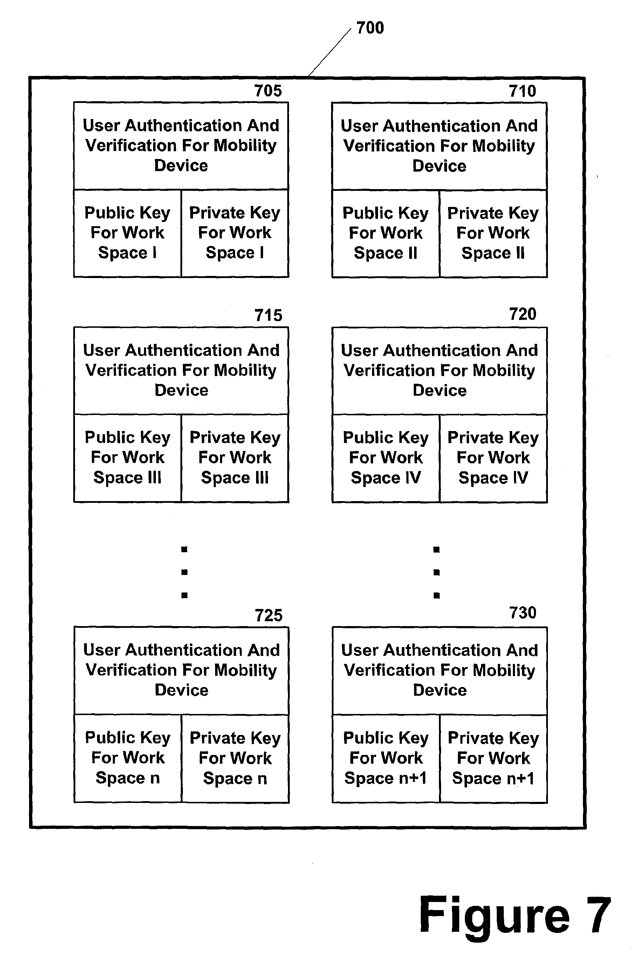

Figure 7 shows a block diagram of an illustrative mobility device and the authentication stack it might contain to allow for the operation of multiple workspaces. As is shown, mobility device 700 may comprises work space 705, 710, 715, 720, 725, and 730. For the purposes of this illustration, a workspace may be considered an independent user environment within the mobility device operating on an independent user authentication and mobility device authentication and verification information. For example, a mobility device may support multiple workspaces, one for enterprise applications and data, one for the participating user's personal gaming applications and data, and one for the participating user's personal shopping applications and data. For each of these workspaces, the mobility device may maintain independent authentication information such that the workspace can be authenticated with cooperating components (e.g. mobility device management servers) providing services and applications to the individual work spaces.

In this context, Figure 7 shows mobility device 700 having work space 705 which itself comprises user authentication and verification for the mobility device and encryption keys, public key for work space 1 and private key for workspace 1. Similarly, workspace 710 has user authentication and verification information for the mobility device and public and private keys for work space 2. As is shown in Figure 7, the same user authentication and public/private key architecture exists for workspace III 715, workspace IV 720 up to an including workspace n 725 and workspace n+1 730. In operation, mobility device 700 may allow a participating user (not shown) to select a workspace for which he/she may log into and transact data and web services. Depending on the workspace the participating user logs into, one or more of the user authentication/public/private key workspace information will be used.

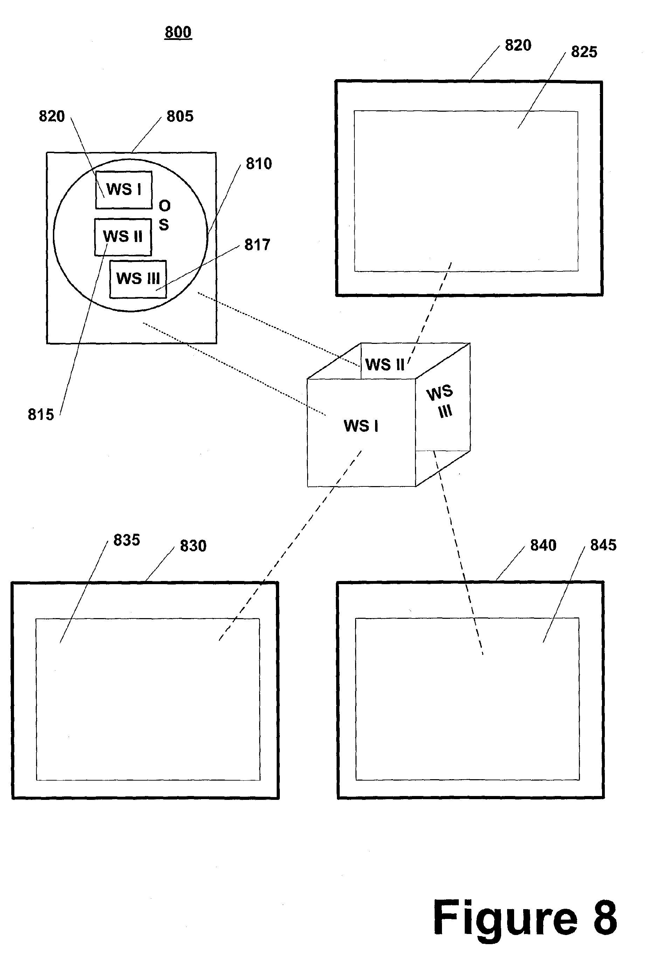

Figure 8 is a block diagram illustrating the workspace implementation of an exemplary mobility device. As is shown in Figure 8, mobility device 805 may support operating system 810 which is operable to execute one or more workspaces 810, and 815. The work spaces may be presented to cooperating computing environments 830, 820, and 840 such that cooperating computing environment 830 displays workspace I820 on display 835. Similarly, cooperating computing environment 840 may display workspace III 817 on display 845, and cooperating computing environment 820 may display workspace II 815 on display 825. As is shown, mobility device 805 may offer (as indicated by the dashed lines) a participating user a graphical representation of the workspaces as a cube which can be rotated such to invoke a particular workspace. In operation, the workspace may be chosen by rotating the cube to the desired workspace and made operational by providing the proper authentication information (e.g. usemame and password)

It is appreciated that although the mobility device is described to have workspaces presentable in a particular configuration (e.g. as a cube), that such description is merely exemplary as the multiple work spaces of the mobility device may be presentable to participating users in a various configurations.

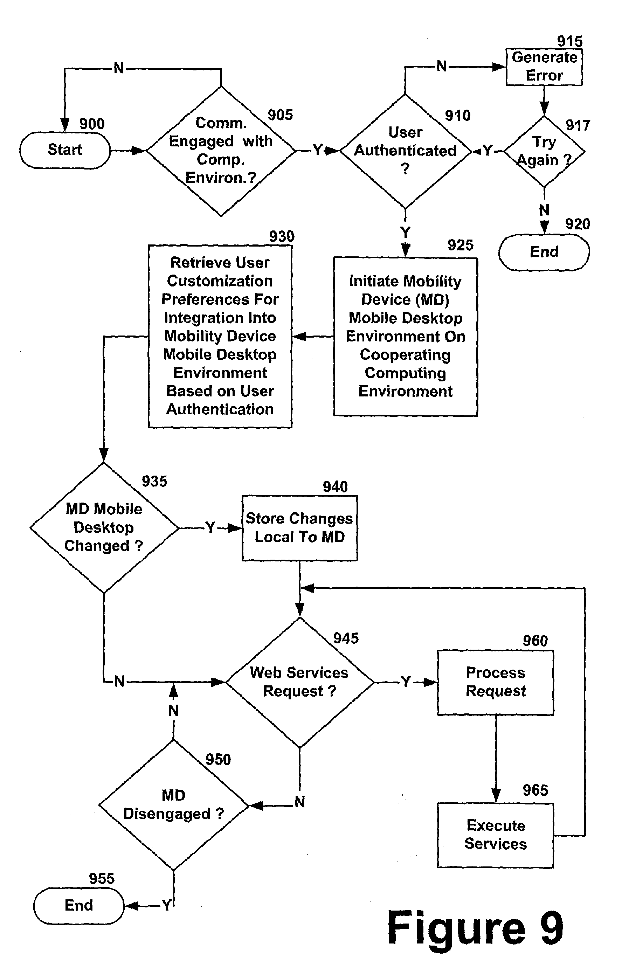

Figure 9 shows the processing performed by exemplary mobility device 600 when being configured to process and execute web services. As is shown, processing begins at block 900 and proceed to block 905 where a check is performed to determine if communication has been engaged between the mobility device and the cooperating computing environment. If the check at block 905 indicates that no communication has been engaged, processing reverts back to block 900 and continues from there.

However, if at block 905 it is determined that communication has been engaged between the mobility device and the cooperating computing environment, processing proceeds to block 910 where a check is performed to authenticate the user. If the check at block 910 indicates that the user has not been successfully authenticated, processing proceeds to block 915 where an error is generated. A check is then performed at block 917 to see if the authentication is to be tried again. If the authentication is to be tried again at block 917, processing reverts to block 910 and continues from there. However if it is determined at block 917 that authentication is not to be tried again, processing proceeds to block 920 and terminates.

If, however, at block 910 the check indicates that the user has been authenticated, processing proceeds to block 925 where mobile desktop environment is initiated for execution on cooperating computing environment. From there user customization preferences for integration into the mobility device mobile desktop environment are retrieved at block 930 using the user authentication information. Processing then proceeds to block 935 where a check is performed to determine if any of the mobility device mobile desktop environment customization has changed. If the check at block 935 indicates that there are changes to the mobility device desktop environment settings, processing proceeds to block 940 where such changes are stored. From there processing proceeds to block 945 where a check is performed to determine if the mobility device is requesting web services. If the check at block 945 indicates that web services are to be executed, processing proceeds to block 960 where the web services request is processed and executed at block 965. From there, processing reverts back to the input of block 945 and continues from there.

However, if the check at block 945 identifies that there is no web services request, processing proceeds to block 950 where a check is performed to determine if the mobility device has been disengaged from the cooperating computing platform. If the check at block 945 indicates that that mobility device has been disengaged from the cooperating computing platform, processing terminates at block 955. However, if the check at block 950 indicates that the mobility device has not been disengaged, processing reverts back to the input of block 945 and continues from there. Also if the check at block 935 indicates that there are no changes to the mobility desktop environment settings processing continues to the input of block 945 and proceeds from there.

In sum, the herein described apparatus and methods provide a mobility device. It is understood, however, that the invention is susceptible to various modifications and alternative constructions. There is no intention to limit the invention to the specific constructions described herein. On the contrary, the invention is intended to cover all modifications, alternative constructions, and equivalents falling within the scope and spirit of the invention.

It should also be noted that the present invention may be implemented in a variety of computer environments (including both non-wireless and wireless computer environments), partial computing environments, and real world environments. The various techniques described herein may be implemented in hardware or software, or a combination of both. Preferably, the techniques are implemented in computing environments maintaining programmable computers that include a processor, a storage medium readable by the processor (including volatile and nonvolatile memory and/or storage elements), at least one input device, and at least one output device. Computing hardware logic cooperating with various instructions sets are applied to data to perform the functions described above and to generate output information. The output information is applied to one or more output devices. Programs used by the exemplary computing hardware may be preferably implemented in various programming languages, including high level procedural or object oriented programming language to communicate with a computer system. Illustratively the herein described apparatus and methods may be implemented in assembly or machine language, if desired. In any case, the language may be a compiled or interpreted language. Each such computer program is preferably stored on a storage medium or device (e.g., ROM or magnetic disk) that is readable by a general or special purpose programmable computer for configuring and operating the computer when the storage medium or device is read by the computer to perform the procedures described above. The apparatus may also be considered to be implemented as a computer-readable storage medium, configured with a computer program, where the storage medium so configured causes a computer to operate in a specific and predefined manner.

Although an exemplary implementation of the invention has been described in detail above, those skilled in the art will readily appreciate that many additional modifications are possible in the exemplary embodiments without materially departing from the novel teachings and advantages of the invention. Accordingly, these and all such modifications are intended to be included within the scope of this invention. The invention may be better defined by the following exemplary claims.

## Claims

1. A mobility device for processing web services comprising:
a processing unit operative to perform at least one web services computing operation;
a communications interface operatively connecting the mobility device to at least one cooperating computing environment;
a memory storage unit cooperating with the processing unit to store web services data and transaction information; and
an operating system operable on the processing unit to execute at least one encrypted web service.

2. The mobility device as recited in claim 1 further comprising a peripheral interface module operative to accept and cooperate with peripherals comprising any of: flash memory, communications interface, automation control peripherals and input peripherals.

3. The mobility device as recited din claim 1 further comprising NAND flash memory operatively coupled to the processing unit and utilized as part of web services processing.

4. The mobility device as recited in claim 1 further comprising a mobile desktop computing application operable to present a desktop computing environment on the at least one cooperating computing environment when the mobility device is in communication with the at least one cooperating computing environment.

5. The mobility device as recited in claim 4 further comprising a user management module operable to customize participating users preferences and settings for the mobility device.

6. The mobility device as recited in claim 1 further comprising an auto-run module operative with the operating system to allow the mobility device to begin automated configuration and cooperation with the at least one computing environment.

7. The mobility device as recited in claim 6 wherein the at least one computing environment comprise an operating system native to the at least one computing environment.

8. The mobility device as recited in claim 7 wherein the operating system of the mobility device controls the operating system native to the at least one computing environment.

9. The mobility device as recited in claim 8 further comprising a user authentication and management module operative to authenticate a participating user with the mobility device using user authentication information.

10. The mobility device as recited in claim 9 wherein the user authentication information comprises any of user identification information and user password information.

11. The mobility device as recited in claim 1 further comprising a mobility device platform authentication and verification module operative to authenticate the mobility device with a cooperating mobility device management server.

12. The mobility device as recited in claim 11 wherein the mobility device cooperates with the mobility device management server to obtain web services.

13. The mobility device as recited in claim 12 wherein the mobility device management server provides web services to the mobility device upon authenticating the mobility device.

14. The mobility device as recited in claim 1 further comprising a math co-processor cooperating with the processing unit to process web services.

15. The mobility device as recited in claim 14 further comprising an encryption module for use to encrypt and decrypt web services transactions

16. The mobility device as recited in claim 1 wherein the operating system comprises a java virtual machine (JVM) operable to execute various computing applications.

17. The mobility device as recited in claim 16 wherein the computing applications comprise any of an e-mail computing application, a word processor computing application, a browser computing application, a mobile desktop environment, a spread sheet computing application and other computing applications that may be presented as web services.

18. The mobility device as recited in claim 17 further comprising a work space module operative to allow the operation of a plurality of work spaces on the mobility device.

19. The mobility device as recited in claim 18 wherein the work space module is operative to control access to each of the workspaces using mobility device authentication information.

20. The mobility device as recited in claim 19 wherein the configuration information for each workspace is stored in the memory storage unit.

21. A method to securely communicate web services across a networked computing environment comprising:
providing a mobility device operable to process web services;
establishing communications between the mobility device and a cooperating mobility device management server over a communications link; and
executing an encrypted web service provided by the mobility device management server at the mobility device.

22. The method as recited in claim 21 further comprising authenticating the mobility device by the mobility device management server to ensure that the mobility device has the proper access, rights, and privileges to receive a requested web service provided by the mobility device management server.

23. The method as recited in claim 22 further comprising communicating requested web services from the mobility device management server to an authenticated mobility device.

24. The method as recited in claim 21 further comprising establishing a communications link between the mobility device and a cooperating computing environment.

25. A system for securely executing web services on cooperating computing environments comprising:
a first processing unit means for processing web services and associated web services transaction data;
a second means for storing web services and associated web services transaction data; and
a third means for connecting the first means and second means to cooperating computing environments.

26. The system as recited in claim 25 further comprising a fourth means for authenticating the system with the cooperating computing environments.

27. The system as recited in claim 26 further comprising a fifth means for communicating with mobility device management servers providing web services.

28. The system as recited in claim 25 further comprising a sixth means for executing computing applications on the cooperating computing environments through the third means.

29. A method to configure a mobility device for operation on a cooperating computing environment comprising:
initiating auto-run operations on the mobility device to allow the mobility device to automatically configure and associate itself with the cooperating computing environment;
obtaining user authentication information;
verifying user authentication information; and
upon successful user authentication the mobility device cooperating with the cooperating computing environment to execute web services.

30. The method as recited in claim 29 further comprising executing a computing application comprising any of e-mail, word processor, spreadsheet, browser, desktop environment and user management application on the cooperating computing environment by the mobility device.

31. The method as recited in claim 30 further comprising storing web services and associated web services transactions on the mobility device.

32. A computer readable medium having computer readable instructions to instruct a computer to perform a method comprising:
initiating auto-run operations on the mobility device to allow the mobility device to automatically configure and associate itself with the cooperating computing environment;
obtaining user authentication information;
verifying user authentication information; and
upon successful user authentication the mobility device cooperating with the cooperating computing environment to execute web services.

33. The mobility device as recited in claim 1 further comprising a means for providing security for the mobility device comprising any of biometric security mechanism, retinal scanning security mechanism, and voice recognition security mechanism.
